# FASCICULE DE BREVET EUROPEEN

(11) **EP 1 914 110 B1**
(45) Date de publication et mention de la délivrance du brevet: **07.03.2012**
(21) Numéro de dépôt: 07301472.2
(22) Date de dépôt: 17.10.2007
(51) Int. Cl.: B60N 2/12, B60N 2/20, B60N 2/02

(54) **Dispositif de commande d'un siege motorise de vehicule automobile**
Vorrichtung zur Bedienung eines motorisierten Sitzes eines Kraftfahrzeugs
Device for controlling a motorised seat of an automobile

(30) Priorité: 20.10.2006 FR 0654398
(43) Date de publication de la demande: 23.04.2008
(73) Titulaire: PEUGEOT CITROËN AUTOMOBILES S.A., 78140 Vélizy Villacoublay (FR)
(72) Inventeur: Foure, Franck, 90000 Belfort (FR)

(56) Documents cités:
- FR-A- 2 668 620
- FR-A1- 2 868 366
- JP-A- 58 076 336
- US-B1- 6 460 934

## Description

L'invention concerne un dispositif de commande d'un siège motorisé de véhicule automobile, ce siège comprenant une assise portant un dossier basculant entre une position droite et une position rabattue sur l'assise, et des moyens de commande pour déclencher l'avance et le recul motorisés de ce siège.

L'invention s'applique aux sièges pour véhicules de type coupé ou trois portes, c'est-à-dire dans lesquels les sièges avant doivent être déplacés pour permettre l'accès aux places arrières du véhicule.

Grâce à la motorisation, il n'est pas nécessaire d'exercer d'effort important pour avancer et reculer le siège lorsqu'un utilisateur doit accéder à une place arrière ou en sortir.

L'invention concerne un dispositif de commande d'un tel siège, offrant à la fois une ergonomie et une sécurité d'utilisation optimales.

Le document US 6 460 934 montre un siège de véhicule comprenant toutes les caractéristiques techniques du préambule de la revendication 1.

A cet effet, l'invention a pour objet un dispositif de commande d'un siège motorisé de véhicule automobile, ce siège comprenant une assise portant un dossier basculant entre une position droite et une position rabattue sur l'assise, un capteur apte à délivrer un signal représentatif de l'état droit du dossier, et des moyens de commande pour déclencher l'avance automatique de l'ensemble du siège lorsque le dossier est replié, vers une position avancée permettant à un utilisateur d'accéder à des places arrières du véhicule, et dans lequel les moyens de commande comprennent un interrupteur électrique, pour provoquer le recul du siège lorsque l'interrupteur est actionné alors que le dossier occupe sa position droite.

le dispositif, comprend au moins un capteur de présence apte à délivrer un signal représentatif de la présence d'un occupant dans le siège, pour interdire le déclenchement de l'avance ou du recul du siège lorsqu'un occupant est assis dans ce siège.

L'invention concerne également un dispositif tel que défini ci-dessus, dans lequel l'interrupteur électrique est un bouton poussoir implanté dans le dossier du siège.

L'invention concerne également un dispositif tel que défini ci-dessus, dans lequel l'interrupteur est implanté au niveau d'un appuie-tête du dossier du siège.

L'invention concerne également un dispositif tel que défini ci-dessus, dans lequel le capteur de présence est un capteur délivrant un signal représentatif de l'état bouclé d'une ceinture de sécurité équipant ce siège.

L'invention concerne également un dispositif tel que défini ci-dessus, comprenant un capteur représentatif de la vitesse du véhicule pour interdire le déclenchement de l'avance ou du recul du siège lorsque le véhicule a une vitesse non nulle.

L'invention concerne également un dispositif tel que défini ci-dessus, comprenant une unité centrale reliée aux capteurs, à l'interrupteur, et à des moyens de motorisation du siège pour commander l'avance ou le recul du siège en fonction des signaux issus du ou des capteurs et de l'interrupteur.

L'invention concerne également un véhicule automobile comprenant un dispositif de commande tel que défini ci-dessus.

L'invention sera maintenant décrite plus en détail, et en référence aux figures annexées.
La figure 1 est une vue latérale d'un siège avant de véhicule automobile en position dite normale ;
La figure 2 est une vue latérale du siège de la figure 1 lorsque le dossier est rabattu ;
La figure 3 est une vue latérale du siège des figures 1 et 2 en position avancée lorsque le dossier est rabattu ;
La figure 4 est une vue latérale du siège des figures 1 à 3 en position avancée alors que le dossier est droit.

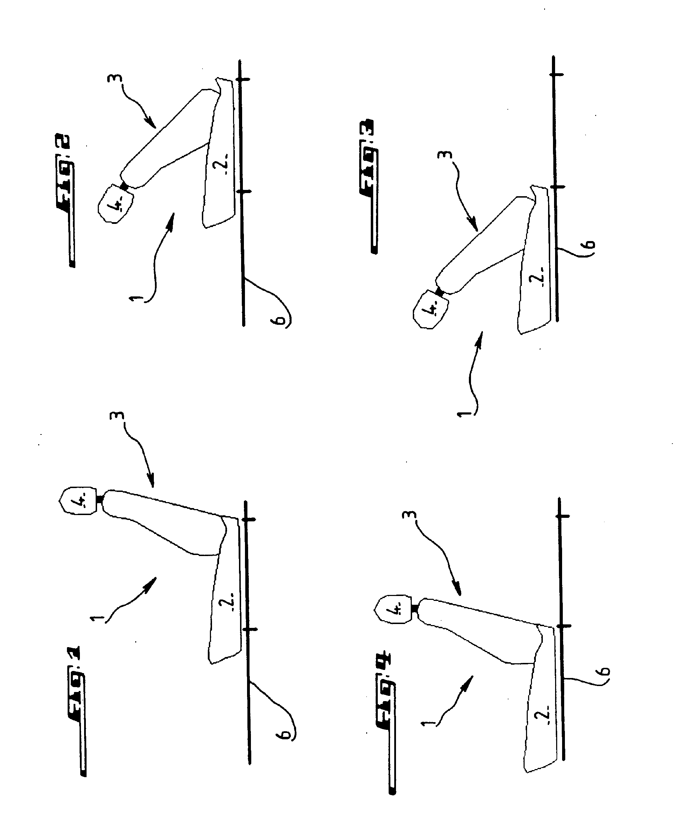

Dans la figure 1, on a représenté un siège avant équipant un véhicule automobile de type coupé ou trois portes, ce siège étant mobile vers l'avant pour permettre l'accès, via une porte latérale, à des places arrières du véhicule.

Ce siège, repéré par 1, comprend une assise 2 portant un dossier basculant 3 incluant un appui-tête 4. L'assise 2 est montée sur des rails 6 pour pouvoir coulisser longitudinalement vers l'avant et vers l'arrière.

En situation d'utilisation, le siège occupe une position dite normale dans laquelle un occupant peut s'y installer.

Ce siège est du type motorisé, c'est-à-dire que son déplacement depuis la position normale vers la position avant et depuis la position avant vers la position normale est assuré par des organes moteurs pilotés via un dispositif de commande, lorsque ce dispositif est sollicité par un utilisateur.

A cet effet, le siège comprend une unité de commande, un capteur de la position du dossier, un capteur de présence d'occupant, et un interrupteur du type bouton poussoir qui est implanté dans le dossier.

L'unité de commande est reliée aux capteurs et à l'interrupteur, ainsi qu'aux organes de motorisation afin de déclencher le déplacement du siège dans certaines circonstances.

Le déplacement du siège depuis sa position dite normale correspondant à la figure 1 est piloté par l'unité de commande lorsque le dossier est rabattu par un utilisateur, comme illustré sur la figure 2.

Dans ce cas, l'unité de commande, sur détection de l'état non droit du dossier, pilote les organes motorisés pour faire avancer le siège jusqu'à ce qu'il atteigne une position avancée maximale correspondant à la situation de la figure 3, et dans laquelle il est en appui sur des butées mécaniques.

Les organes peuvent avantageusement être pilotés par l'unité de commande pour que l'avance soit du type rapide de manière à minimiser le temps d'accès aux places arrières. En effet, lorsque le siège avance, le fait que le dossier est rabattu est suffisant pour considérer que le siège est vide, c'est-à-dire que cette avance rapide ne présente pas de risque pour un utilisateur.

La commande du recul du siège nécessite au moins que deux conditions soient remplies, à savoir qu'un interrupteur non représenté, qui est un bouton poussoir implanté dans le dossier soit enfoncé, et que le dossier soit droit.

Ainsi, lorsque l'unité de commande détecte que le bouton poussoir est enfoncé alors que le capteur de position du dossier délivre un signal représentatif de l'état droit du dossier, elle pilote les organes motorisés pour qu'ils reculent le siège jusqu'à ce qu'il atteigne sa position normale correspondant à celle de la figure 1.

Grâce à cette disposition, si le recul du siège interfère avec un occupant assis à l'arrière du véhicule, en risquant de coincer ses jambes, il suffit de relâcher le bouton poussoir pour arrêter immédiatement le mouvement du siège.

Le fait que le bouton poussoir est implanté au niveau du dossier du siège et que le recul n'est possible que si le dossier est droit permet à un occupant assis à l'arrière du véhicule de contrôler lui-même continûment le recul du siège, une fois qu'il a relevé le dossier, en enfonçant ou en relâchant le bouton poussoir qui lui est alors accessible.

Grâce à ce contrôle permanent, le recul du siège peut être lui aussi effectué à grande vitesse, sans risque de coincer les jambes d'un occupant assis à la place arrière. Si l'occupant assis sur le siège arrière s'aperçoit que le recul du siège risque de coincer ses jambes, il peut immédiatement arrêter le mouvement du siège simplement en relâchant le bouton poussoir.

Du fait de l'implantation du bouton poussoir au niveau du dossier du siège, le recul du siège peut être piloté par un occupant assis à l'arrière en vis-à-vis du siège à déplacer, mais il peut aussi être piloté par un utilisateur situé debout à l'extérieur du véhicule.

Avantageusement, le bouton poussoir est implanté dans le dossier du siège, du côté de sa face latérale externe, c'est-à-dire du côté droit dans le cas d'un siège passager, et du côté gauche dans le cas d'un siège conducteur.

Afin de faciliter encore son accessibilité, ce bouton poussoir est avantageusement monté au niveau de l'appui-tête du dossier, sur la face latérale externe.

L'implantation du bouton poussoir est ainsi avantageusement prévue pour permettre à un occupant assis à l'arrière de manoeuvrer le siège y compris lorsque la porte correspondante est fermée.

Avantageusement, l'unité de commande est configurée pour interdire les mouvements du siège dans certaines situations, en particulier lorsque le véhicule roule et lorsque la présence d'un occupant est détectée dans le siège.

Ces conditions supplémentaires sont particulièrement adaptées au cas du siège conducteur, car elles assurent que le siège conducteur ne peut pas être déplacé de manière intempestive par un passager arrière.

Ainsi, l'unité de commande est avantageusement connectée au capteur de présence et au capteur de vitesse du véhicule de manière à interdire le recul du siège si le véhicule n'est pas immobile et si la présence d'un occupant dans le siège est détectée.

Le capteur de présence peut être une sonde de pression intégrée à l'assise du siège, mais il peut également s'agir d'un capteur de l'état bouclé ou non bouclé de la ceinture de sécurité équipant le siège.

Avantageusement, l'unité de commande est configurée pour détecter l'existence d'un défaut du capteur du dossier du siège conducteur, de manière à interdire, dès lors, tout mouvement du siège.

Un tel défaut est détecté par l'unité de commande lorsqu'elle reçoit un signal du capteur de position du dossier représentatif d'un état non droit du dossier du siège conducteur alors que le véhicule roule. En effet, une telle situation est absurde du fait que si le véhicule roule, le siège conducteur est nécessairement occupé, de sorte que le dossier est alors nécessairement droit.

Dans ce cas, l'unité de commande interdit tout mouvement du siège conducteur tant que le véhicule n'est pas repassé en veille, c'est-à-dire tant que le contact n'a pas été éteint, et tant que le capteur de position du dossier n'a pas émis un signal représentatif d'un état droit de ce dossier.

Ainsi, un défaut du capteur de position du dossier est détecté par l'utilisateur qui s'aperçoit qu'il ne peut plus déplacer le siège, ce qui l'incite à contacter un réparateur.

Le dispositif de commande selon l'invention permet de répondre à différents impératifs qui sont essentiels, en particulier pour le cas du siège conducteur dont elle permet d'interdire les déplacements intempestifs qui sont déstabilisants.

Ainsi, le siège conducteur ne peut pas être déplacé lorsque le véhicule roule, mais le siège conducteur ne peut pas non plus être déplacé lorsque le véhicule est immobile alors que le conducteur est assis dans ce siège, ce qui correspond au cas d'un arrêt à un feu rouge.

Pour permettre à un utilisateur situé à l'arrière du siège conducteur, de descendre, le conducteur doit donc impérativement arrêter le véhicule et en descendre pour provoquer l'avance du siège en pliant le dossier et en enfonçant le bouton poussoir.

D'une manière générale, le dispositif de commande est avantageux dans le cas des véhicules ayant des places arrières de faibles dimensions, car il permet une commande semi-automatique rapide des mouvements du siège sans risque de coincer les jambes d'occupants situés à l'arrière puisque le contrôle du mouvement est assuré par un utilisateur durant tout le mouvement de recul.

## Revendications

1. Dispositif de commande d'un siège motorisé (1) de véhicule automobile, ce siège comprenant une assise (2) portant un dossier basculant (3) entre une position droite et une position rabattue sur l'assise, un capteur apte à délivrer un signal représentatif de l'état droit du dossier, et des moyens de commande pour déclencher l'avance automatique de l'ensemble du siège (1) lorsque le dossier (3) est replié, vers une position avancée permettant à un utilisateur d'accéder à des places arrières du véhicule, et dans lequel les moyens de commande comprennent un interrupteur électrique, pour provoquer le recul du siège (1) lorsque l'interrupteur est actionné alors que le dossier (3) occupe sa position droite, **caractérisé en ce que** le dispositif comprend au moins un capteur de présence apte à délivrer un signal représentatif de la présence d'un occupant dans le siège (1), pour interdire le déclenchement de l'avance ou du recul du siège (1) lorsqu'un occupant est assis dans ce siège.

2. Dispositif selon la revendication 1, dans lequel l'interrupteur électrique est un bouton poussoir implanté dans le dossier (3) du siège (1).

3. Dispositif selon les revendications 1 ou 2, dans lequel l'interrupteur est implanté au niveau d'un appuie-tête (4) du dossier (3) du siège (1).

4. Dispositif selon l'une des revendications 1 à 3, dans lequel le capteur de présence est un capteur délivrant un signal représentatif de l'état bouclé d'une ceinture de sécurité équipant ce siège (1).

5. Dispositif selon l'une des revendications 1 à 4, comprenant un capteur représentatif de la vitesse du véhicule pour interdire le déclenchement de l'avance ou du recul du siège (1) lorsque le véhicule a une vitesse non nulle.

6. Dispositif selon l'une des revendications 1 à 5, comprenant une unité centrale reliée aux capteurs, à l'interrupteur, et à des moyens de motorisation du siège (1) pour commander l'avance ou le recul du siège en fonction des signaux issus du ou des capteurs et de l'interrupteur.

7. Véhicule automobile comprenant un dispositif de commande selon l'une des revendications 1 à 6.

## Claims

1. A control device of a motorized seat (1) of a motor vehicle, this seat comprising a seating portion (2) carrying a back (3) rocking between an upright position and a folded position on the seating portion, a sensor suited to deliver a representative signal of the upright state of the back, and control means to trigger the automatic advance of the assembly of the seat (1) when the back (3) is folded, towards an advanced position permitting a user to have access to rear places of the vehicle, and in which the control means comprise an electrical interrupter, to cause the withdrawal of the seat (1) when the interrupter is actuated while the back (3) occupies its upright position, **characterized in that** the device comprises at least one presence sensor suited to deliver a representative signal of the presence of an occupant in the seat (1), to prohibit the triggering of the advance or withdrawal of the seat (1) when an occupant is sitting on this seat.

2. The device according to Claim 1, in which the electrical interrupter is a push button installed in the back (3) of the seat (1).

3. The device according to Claims 1 or 2, in which the interrupter is installed at the level of a head-rest (4) of the back (3) of the seat (1).

4. The device according to one of Claims 1 to 3, in which the presence sensor is a sensor delivering a representative signal of the buckled state of a safety belt equipping this seat (1).

5. The device according to one of Claims 1 to 4, comprising a representative sensor of the speed of the vehicle to prohibit the triggering of the advance or withdrawal of the seat (1) when the vehicle has a non zero speed.

6. The device according to one of Claims 1 to 5, comprising a central unit connected to the sensors, to the interrupter, and to motorization means of the seat (1) to control the advance or the withdrawal of the seat as a function of the signals issued from the sensor or sensors and the interrupter.

7. A motor vehicle comprising a control device according to one of Claims 1 to 6.

## Patentansprüche

1. Vorrichtung zur Bedienung eines motorisierten Sitzes (1) eines Kraftfahrzeugs, wobei dieser Sitz eine Sitzfläche (2) aufweist, die eine Rückenlehne (3) trägt, die zwischen einer aufgerichteten Position und einer auf die Sitzfläche geklappten Position kippt, einen Sensor, der ein Signal liefern kann, das für den aufgerichteten Zustand der Rückenlehne repräsentativ ist, und Bedienmittel zum Auslösen des automatischen Vorfahrens der Einheit des Sitzes (1), wenn die Rückenlehne (3) geklappt wird, zu einer vorgefahren Position, die es einem Benutzer erlaubt, zu den hinteren Sitzplätzen des Fahrzeugs zu gelangen, und bei der die Bedienmittel einen elektrischen Schalter aufweisen, um das Zurückfahren des Sitzes (1) zu veranlassen, wenn der Schalter betätigt wird, während die Rückenlehne (3) ihre aufgerichtete Position einnimmt, **dadurch gekennzeichnet, dass** die Vorrichtung mindestens einen Gegenwartssensor aufweist, der ein Signal senden kann, das für die Gegenwart eines Insassen auf dem Sitz (1) repräsentativ ist, um das Auslösen des Vorschubs oder des Rückschubs des Sitzes (1) zu untersagen, wenn ein Insasse auf diesem Sitz sitzt.

2. Vorrichtung nach Anspruch 1, wobei der elektrische Schalter ein Drucktaster ist, der in der Rückenlehne (3) des Sitzes (1) angeordnet ist.

3. Vorrichtung nach den Ansprüchen 1 oder 2, bei der der Schalter auf dem Niveau einer Kopfstütze (4) der Rückenlehne (3) des Sitzes (1) angeordnet ist.

4. Vorrichtung nach einem der Ansprüche 1 bis 3, bei der der Gegenwartssensor ein Sensor ist, der ein Signal liefert, das für den angeschnallten Zustand eines Sicherheitsgurts, der den Sitz (1) ausstattet, repräsentativ ist.

5. Vorrichtung nach einem der Ansprüche 1 bis 4, die einen Sensor aufweist, der für die Geschwindigkeit des Fahrzeugs repräsentativ ist, um das Auslösen des Vorschubs oder des Rückschubs des Sitzes (1) zu untersagen, wenn das Fahrzeug eine Geschwindigkeit hat, die nicht gleich null ist.

6. Vorrichtung nach einem der Ansprüche 1 bis 5, die eine Zentraleinheit aufweist, die mit den Sensoren, mit dem Schalter und mit Antriebsmitteln des Sitzes (1) verbunden ist, um den Vorschub oder den Rückschub des Sitzes (1) in Abhängigkeit von den Signalen, die von dem Sensor oder den Sensoren und dem Schalter stammen, zu bedienen.

7. Kraftfahrzeug, das eine Bedienvorrichtung nach einem der Ansprüche 1 bis 6 aufweist.
